**Europäisches Patentamt**

(19) **European Patent Office**

**Office européen des brevets**

(11) Veröffentlichungsnummer: **0 152 048**

**A2**

(12) **EUROPÄISCHE PATENTANMELDUNG**

(21) Anmeldenummer: **85101153.6**

(22) Anmeldetag: **04.02.85**

(51) Int. Cl.⁴: **A 01 C 7/04**

(30) Priorität: **15.02.84 DE 3405361**

(43) Veröffentlichungstag der Anmeldung:
**21.08.85** Patentblatt **85/34**

(84) Benannte Vertragsstaaten:
**AT BE CH DE FR GB IT LI LU NL SE**

(71) Anmelder: **Amazonen-Werke H. Dreyer GmbH & Co. KG**

**D-4507 Hasbergen-Gaste(DE)**

(72) Erfinder: **Scheufler, Bernd, Dr.**
**Am Amazonenwerk 101**
**D-4507 Hasbergen(DE)**

(72) Erfinder: **Kemper, Martin**
**An der Gänsekuhle 7**
**D-4709 Bergkamen(DE)**

(74) Vertreter: **Patentanwälte Grünecker, Dr. Kinkeldey, Dr.**
**Stockmair, Dr. Schumann, Jakob, Dr. Bezold, Meister,**
**Hilgers, Dr. Meyer-Plath**
**Maximilianstrasse 58**
**D-8000 München 22(DE)**

(54) **Pneumatische Einzelkornsämaschine.**

(57) Pneumatische Einzelkornsämaschine mit einem Saatgutbehälter und einer Saugkammer, die voneinander durch ein umlaufendes scheibenförmiges Vereinzelungsorgan getrennt sind, welches auf der der Saugkammer abgewandten Seite im unteren Bereich durch den im Saatgutbehälter vorhandenen Saatgutvorrat geführt wird und konzentrisch zu der Vereinzelungsorganachse im gleichen Unmfangsabstand voneinander angeordnete Löcher aufweist, wobei die Saugkammer sich längs eines Teils der Bahn der Löcher erstreckt und an einem Punkt der Bahn der Unterdruck unterbrochen ist, wobei in dem Bereich, in dem der Unterdruck unterbrochen ist, ein zumindest annähernd bis an die Mittellinie der Löcher heranreichendes bewegbares Auswerferelement angeordnet ist. Um die Abgabe der vereinzelten Körner und deren Ablage in der Säfurche zu vergleichmäßigen, sind auf dem Vereinzelungsorgan (19) auf der dem Saatgutbehälter (6) zugewandten Seite eine Anzahl der Löcher (20) entsprechende Anzahl von Steuernocken (26) angeordnet, wobei das Auswerferelement (41) mit Hilfe der Steuernocken (26) zu betätigen ist (Fig.4).

FIG. 1

EP 0 152 048 A2

Croydon Printing Company Ltd.

Beschreibung

## Pneumatische Einzelkornsämaschine

Die Erfindung betrifft eine pneumatische Einzelkornsämaschine gemäß des Oberbegriffes des Anspruches 1.

Eine derartige Einzelkornsämaschine ist bereits durch die DE-OS 22 50 115 bekannt. Diese Einzelkornsämaschine weist ein als geschlossenes Gehäuse ausgebildetes Vereinzelungsorgan auf, welches an seinem äußeren Umfang mit als Löcher ausgebildeten Ansaugöffnungen versehen ist. Das Innere des Vereinzelungsorgans wird mit Saugluft beaufschlagt, so daß beim Durchgang der Löcher durch den Saatgutvorrat Saatkörner an die Löcher angesaugt werden. Die an die Löcher angesaugten und vereinzelten Saatkörner werden bis zum unteren Bereich des Vereinzelungsorgans mitgenommen. Im unteren Bereich des Vereinzelungsorgans ist in dessen Gehäuse ein mit Zinken versehenes Sternrad, welches als Auswerferelement dient, angeordnet. Die Zinken dieses Sternrades ragen in den unteren Bereich des Vereinzelungsorgans jeweils in ein Loch des Vereinzelungsorgans. Hierdurch unterbrechen die Zinken jeweils den an dem jeweiligen Loch anliegenden Sagluftstrom, so daß die Saatkörner von den Löchern abfallen können bzw. von den Zinken ausgestoßen weden, wenn sich die Saatkörner in den Löchern festgesetzt bzw. verklemmt haben.

Durch dieses Auswerferelement wird zwar sichergestellt, daß jedes der an den Löchern anhaftenden Saatkörner von den Löchern gelöst wird, aber eine gleichmäßige und regelmäßige Abgabe der Saatgutkörner von den Löchern ist nicht gewährleistet, so daß die Saatkörner in ungleichmäßigen Abständen in der Säfurche abgelegt werden. Dieses ist darauf zurückzuführen, daß einige Saatkörner bereits beim Unterbrechen des an den Löchern anliegenden Sagluftstromes von dem Vereinzelungsorgan abfallen und die übrigen Saatkörner sich erst von den Löchern lösen, wenn sie von den Zinken des Auswerferelementes ausgestoßen werden.

Der Erfindung liegt die Aufgabe zugrunde, die Abgabe der vereinzelten Körner und deren Ablage in der Säfurche zu vergleichmäßigen.

Diese Aufgabe wird erfindungsgemäß durch den kennzeichnenden Teil des Anspruches 1 gelöst. Infolge dieser Maßnahmen wird das Auswerferelement von den Steuernocken aus der Ausgangsstellung, in der das wirksame Ende des Auswerferelementes bis an die Löcher heranreicht, jeweils gespannt, so daß das Auswerferelement nach dem Passieren der Steuernocken jeweils wieder in seine Ausgangsstellung zurückschnellt. Hierbei trifft das wirksame Ende des Auswerferelementes auf das an dem jeweiligen Loch anliegende Saatkorn. Das jeweilige Saatkorn wird von dem Auswerferelement in Richtung auf den Boden der Säfurche beschleunigt. Hierdurch wird allen Saatkörnern immer die gleiche definierte Richtung gegeben und alle Saatkörner werden mit der gleichen Anfangsgeschwindigkeit abgeworfen, so daß die Saatkörner mit den gleichmäßigen Abständen, wie sie an dem Vereinzelungsorgan an den Löchern anliegen, auf dem Boden der Säfurche abgelegt werden. Aufgrund der immer gleichen Richtung und der großen Geschwindigkeit, die den Saatkörnern von dem Auswerferelement erteilt wird, wirkt sich auch ein relativ großer Abstand zwischen dem Boden der Säfurche und dem Abgabepunkt der Saatkörner an dem Vereinzelungsorgan nicht aus; d.h., daß das Vereinzelungsorgan relativ hoch über dem Boden angeordnet sein kann, ohne daß sich dieses nachteilig auf die gleichmäßige Ablage der Saatkörner auswirkt.

Weiterhin ergibt sich durch die erfindungsgemäße Betätigung des Auswerfers, daß die Saatkörner nicht bei der Ablage in der Säfurche verrollen können, daß sie aufgrund der hohen Beschleunigung bzw. der hohen Geschwindigkeit fest in den Boden geschossen werden. Außerdem ergibt sich hierdurch ein guter Bodenschluß für die einzelnen Saatkörner, so daß die Keim- und Auflaufbedingungen für die Saatkörner erheblich verbessert werden.

Eine besonders präzise Ablage des Saatgutes wird dadurch erreicht, daß das wirksame Ende des Auswerferelementes sich in dem Bereich an dem Vereinzelungsorgan befindet, in dem der an den Löchern anliegende Unterdruck unterbrochen ist. Hierdurch werden die Saatkörner jeweils genau in dem Moment von dem wirksamen Ende des Auswerferelementes getroffen, wenn der Unterdruck an den Löchern jeweils unterbrochen wird. Denn an dieser Stelle haben die jeweiligen Saatkörner immer die gleiche Position, so daß für jedes Saatkorn immer die gleichen Voraussetzungen gelten, wenn sie von dem wirksamen Ende des Auswerferelementes getroffen werden. Somit ist immer die gleiche Abwurfrichtung gewährleistet.

Damit jedes Saatkorn ausreichend beschleunigt werden kann, ist erfindungsgemäß vorgesehen, daß das wirksame Ende des Auswerferelementes in der zumindest teilweise entspannten Stellung des Auswerferelementes zumindest bis an die Mittellinie der Löcher heranragt.

Um kleine Saatkörner mit dem Auswerferelement beschleunigen zu können, ist erfindungsgemäß vorgesehen, daß das wirksame Ende des Auswerferelementes sich unmittelbar neben der Oberfläche des Vereinzelungsorgans befindet.

Eine besonders einfache Betätigung des Auswerferelementes wird erfindungsgemäß dadurch erreicht, daß das wirksame Ende des Auswerferelementes während der Drehung des Vereinzelungsorgans an den Steuernocken zur Anlage kommt. Hierbei ist es von entscheidender Bedeutung, daß das wirksame Ende des Auswerferelementes jeweils nach dem Passieren eines Steuernockens bis an die Mittellinie des jeweiligen Loches heranreicht.

Weitere Einzelheiten der Erfindung sind den übrigen Unteransprüchen, der Beispielsbeschreibung und den Zeichnungen zu entnehmen. Hierbei zeigen:

Fig.1   eine Einzelkornsämaschine in der Seitenansicht,

Fig.2   das Gehäuse des Vereinzelungsmechanismus der Einzelkornsämaschine in vergrößertem Maßstab ohne Deckel und Vereinzelungsorgan in der Seitenansicht,

Fig.3   den Vereinzelungsmechanismus der Einzelkornsämaschine entsprechend dem Schnitt III-III,

Fig.4   den Vereinzelungsmechanismus im Schnitt IV-IV,

Fig.5   die Anordnung und Funktion eines Auswerferelementes an dem
Vereinzelungsorgan in Teilansicht und der Ansicht gemäß
Fig.4,

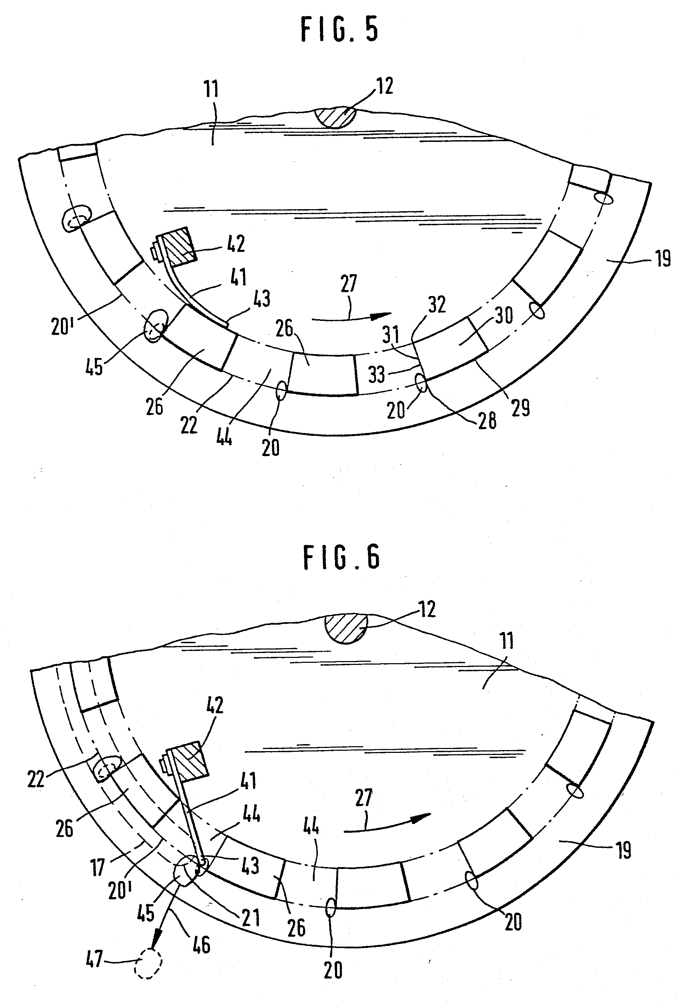

Fig.6   die Anordnung und Funktion des Auswerferelementes nach
Fig.5,

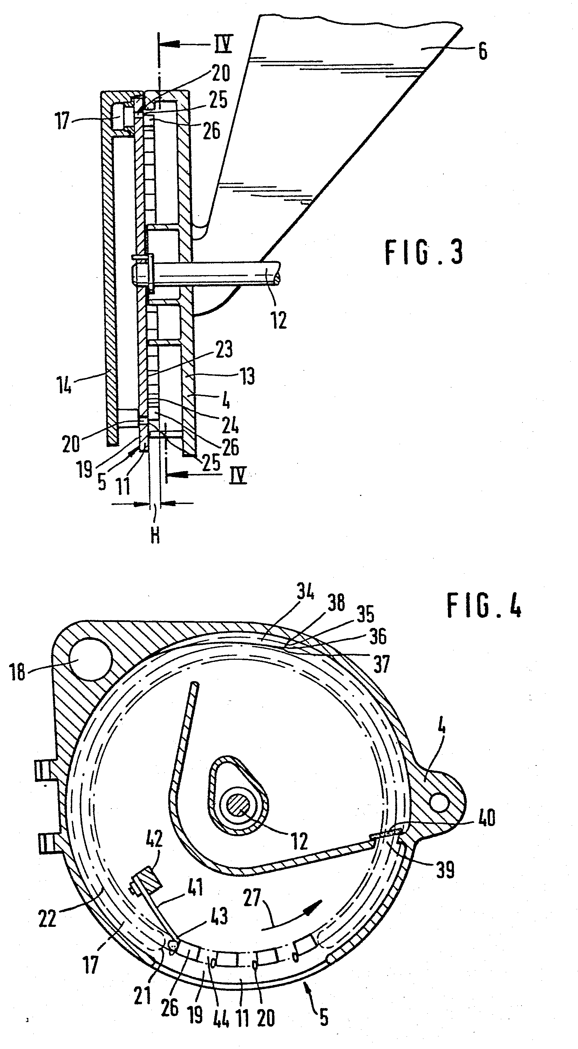

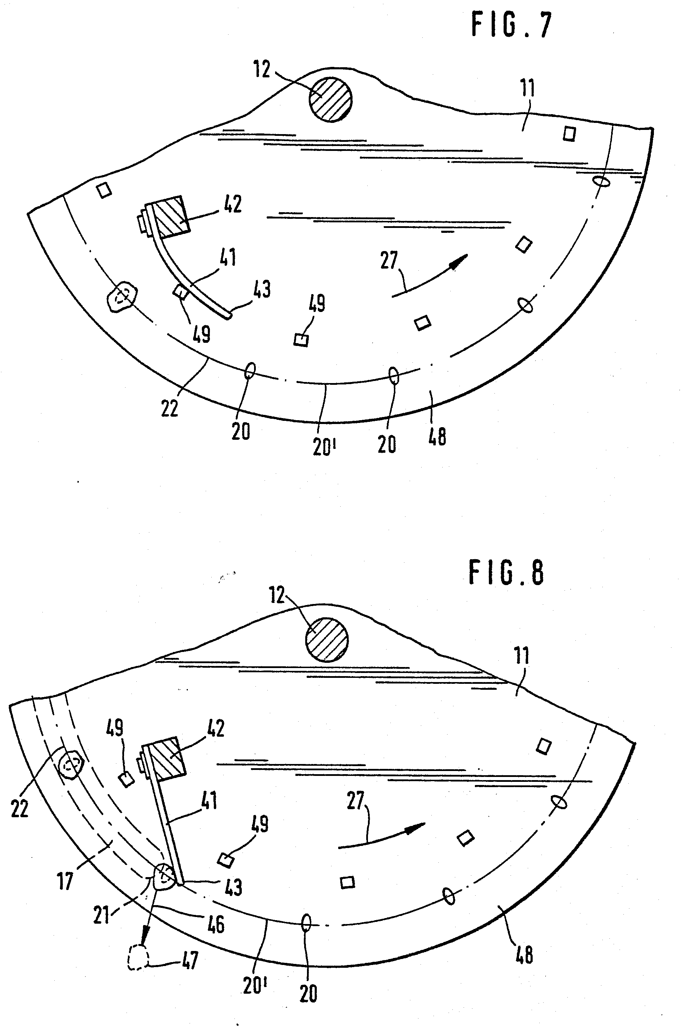

Fig.7   die Anordnung und Funktion eines Auswerferelementes an
einem weieren Vereinzelungsorgan in Teilansicht und in der
Ansicht gemäß Fig.4,

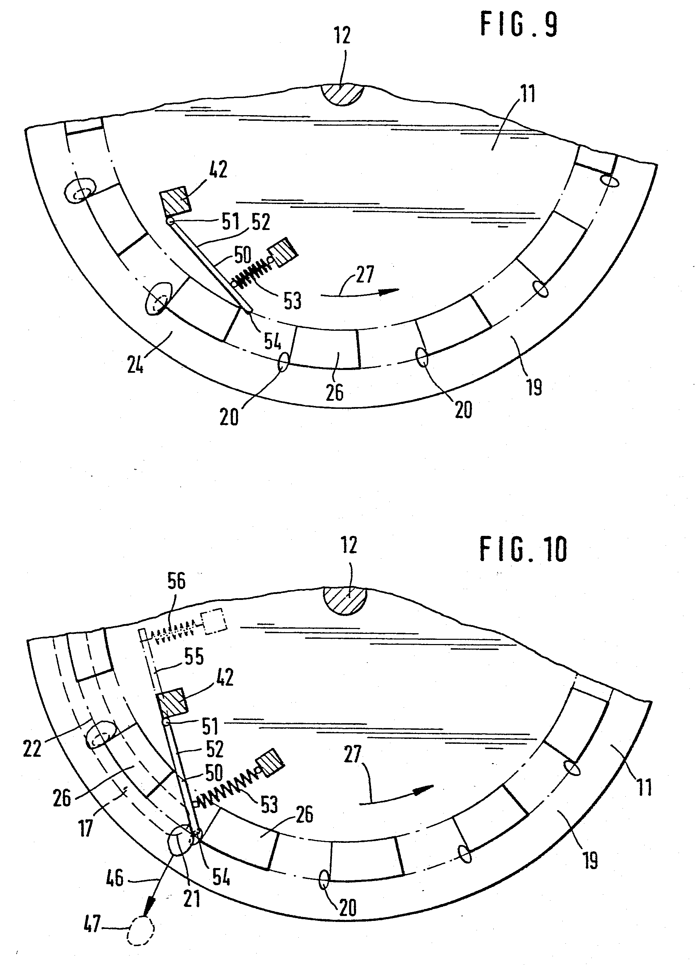

Fig.8   die Anordnung und Funktion des Auswerferelementes nach
Fig.7,

Fig.9   die Anordnung und Funktion eines weiteren Auswerferelementes
an einem Vereinzelungsorgan in Teilansicht und in Ansicht
gemäß Fig.4 und

Fig.10 die Anordnung und Funktion des Auswerferelementes nach
Fig.9.

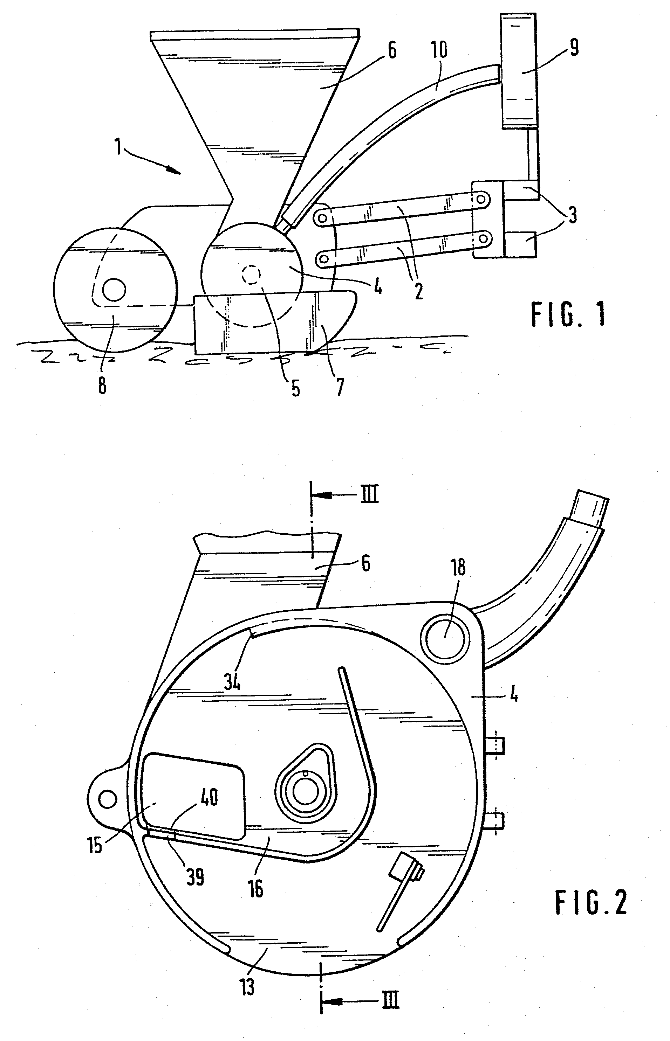

Die in den Fig.1 bis 6 dargestellte Einzelkornsämaschine 1 ist mit weiteren Einzelkornsämaschinen über einzelne Parallelogrammlenker 2 an dem Zentralrahmen 3 angelenkt, der in bekannter und daher nicht dargestellter Weise an einem Schlepper angekuppelt ist. Die Einzelkornsämaschine weist den in dem Gehäuse 4 angeordneten Vereinzelungsmechanismus 5 und den an dem Gehäuse 4 angeflanschten Saatgutbehälter 6 sowie die hinter dem Säschar 7 der Einzelkornsämaschine 1 angeordnete Druckrolle 8 auf. Auf dem Zentralrahmen 3 ist das von der Schleppperzapfwelle in bekannter Weise angetriebene Gebläse 9 angeordnet, welches über an der Saugseite des Gebläses 9 angeschlossene Schläuche 10 jeweils mit den einzelnen Einzelkornsämaschinen 1 verbunden ist.

In dem Gehäuse 4 ist das umlaufende scheibenförmige Vereinzelungsorgan 11 auf der Antriebswelle 12 angeordnet, die in bekannter Weise angetrieben wird. Das Gehäuse 4 besteht aus dem rückwärtigen Teil 13, an dem der Saatgutbehälter 6 angeflanscht ist, und dem Deckel 14. Der rückwärtige Teil des Gehäuses 4 weist die Öffnung 15 zu dem angeflanschten Saatgutbehälter 6 auf, so daß der sich im rückwärtigen Teil 13 des Gehäuses 4 befindliche Saatgutvorratsraum 16 mit dem Saatgutbehälter 6 eine Einheit bildet. In dem Deckel 14 ist die als Saugniere ausgebildete Saugkammer 17 angeordnet, die über den Kanal 18 und dem Schlauch 10 mit der Saugluftseite des Gebläses 9 verbunden ist.

Das Vereinzelungsorgan 11 ist als Scheibe 19 ausgebildet, die die konzentrisch zu der von der Antriebswelle 12 gebildeten Vereinzelungsorganachsen im gleichen Umfangsabstand zueinander angeordneten Löcher 20 aufweist, die auf dem Lochkreis 20' angeordnet sind. Die Saugkammer 17 erstreckt sich längs eines Teils der Bahn der Löcher 20, so daß an einem Punkt 21 der Bahn 22 der Löcher 20 der an die Löcher 20 im Bereich der Saugkammer 17 anliegende Unterdruck unterbrochen wird. Die Scheibe 19 trennt den Saatgutbehälter 6 und die Saugkammer 17 voneinander.

Die Löcher 20 münden auf der Saatgutbehälterseite 23 der Scheibe 19 auf der Scheibenoberfläche 24. In dem Bereich der der Saugkammer 17 abgewandten Mündung 25 dieser Löcher 20 ist auf der Scheibenoberfläche 24 jeweils der als Erhebung ausgebildete Steuernocken 26 angeordnet, wobei sich dieser Steuernocken 26 jeweils auf der in Drehrichtung 27 der Scheibe 19 gesehenen zugewandten Seite 28 des jeweiligen Loches 20 befindet, wobei dieser Steuernocken 26 jeweils unmittelbar vor dem Loch 20 angebracht ist. Somit sind auf der dem Saatgutbehälter 6 zugewandten Seite der Scheibe 19 eine der Anzahl der Löcher 20 entsprechende Anzahl von Steuernocken 26 angeordnet. Der Steuernocken 26 schirmt jeweils das jeweilige Loch 20 in Drehrichtung 27 gesehen zumindest teilweise ab, wobei die Löcher 20 radial nach außen über die Steuernocken 26 hinausragen. Die Löcher 20 sind als sich in radialer Richtung erstreckende Langlöcher ausgebildet, die eine elliptische Form aufweisen. Die Löcher 20 sind in radialer Richtung versetzt nach außen in bezug auf die Steuernocken 26 angeordnet, wobei etwa die Hälfte des jeweiligen Querschnittes jedes Loches 20 innerhalb des um die Vereinzelungsachse mit dem Radius des Abstandes zu den äußeren Flächen 29 der Steuernocken 26 geschlagenen Kreises begrenzten Bereiches liegt und die Steuernocken 26 bis an den Lochkreis 20' heranreichen.

Die Steuernocken 26 sind auf ihrer der Drehrichtung 27 der Scheibe 19 zugewandten Seite 30 in Drehrichtung 27 gesehen schräg abfallend ausgebildet, so daß sie in die Scheibenoberfläche auslaufen. Auf ihrer der Drehrichtung 27 abgewandten Seite 31 sind die Steuernocken 26 steil abfallend ausgebildet, so daß die Seite 31 der Steuernocken 26 in bezug auf die Scheibenebene der Scheibe 19 jeweils aufrecht bzw. senkrecht verläuft. Die der Vereinzelungsorganachse abgewandten Flächen 29 der Steuernocken 26 verlaufen kreisbogenförmig. Die Oberkante 32 der von der Seite 31 der Steuernocken gebildeten Hinterkante 33 verläuft senkrecht zur Scheibendrehachse 12. Die Steuernocken 26 weisen auf ihrer steil abfallenden Seite 31 eine Höhe H auf, die dem halben mittleren Durchmesser der auszubringenden Saatgutsorte entspricht.

Oberhalb der Vereinzelungsorganachse, die von der Antriebswelle 12 gebildet wird, ist auf der Saatgutbehälterseite der Scheibe 19 an dem rückwärtigen Teil 13 des Gehäuses 4 das bis an die Scheibe 19 heranreichende Abstreifelement 34 angeordnet, welches bis an die der Vereinzelungsorganachse abgewandten Seite 31 der Steuernocken 26 heranreicht. Dieses Abstreifelement 34 weist auf der der Drehrichtung 27 der Scheibe 19 zugewandten Seite 35 eine steil abfallende Stufe 36 auf, wobei die Unterkante 37 der Stufe bis an die Steuernocken 26 heranreicht. Die Stufenkante 38 verläuft radial. Das Abstreifelement 32 ist fest an dem Gehäuse angeordnet und einstückig mit dem Gehäuse ausgebildet.

Die Steuernocken 26 laufen durch eine in dem rückwärtigen Teil 13 angebrachte Aussparung 39 in den zu dem Saatgutbehälter 6 gehörenden Saatgutvorratsraum 16 ein.

Auf der Einlaufseite der Steuernocken 26 in diesen Saatgutvorratsraum 16 ist das als Bürste 40 ausgebildete Abweiselement angebracht, das verhindert, daß Saatgut in diese Aussparung eindringt.

Weiterhin ist in dem Bereich bzw. in dem Bereich des Punktes 21, an dem der an den Löchern 20 anliegende Unterdruck unterbrochen ist, ein Auswerferelement 41 an dem rückwärtigen Teil 13 des Gehäuses 4 an dem Vorsprung 42 angeordnet. Das Auswerferelement 41 ist mit einer Schraube an dem Vorsprung 42 befestigt. Weiterhin ist das Auswerferelement 41 ein Federstahlband mit einer guten Eigenfederung. Das wirksame Ende 43 des Auswerferelementes 41 befindet sich in dem Bereich des Punktes 21 an dem Vereinzelungsorgan, in der der an den Löchern 20 anliegende Unterdruck unterbrochen ist. Hierbei ragt das wirksame Ende 43 des Auswerferelementes 41 in der entspannten Stellung des Auswerferelementes 41 bis an die von dem Lochkreis 20' gebildete Mittellinie der Löcher 20 heran, wie Fig.6 zeigt. Weiterhin befindet sich das wirksame Ende 43 des Auswerferelementes 41 unmittelbar neben der Oberfläche 24 der Scheibe 19.

Während der Drehung der Scheibe 19 in Drehrichtung 27 wird das Auswerferelement 41 von den Steuernocken 26 betätigt, so daß das wirksame Ende 43 des Auswerferelementes 41 an den Steuernocken zur Anlage kommt. Hierbei wird das Auswerferelement 41 gespannt. Das wirksame Ende 43 des Auswerferelementes 41 reicht nach dem Passieren des Steuernockens 26 bis an den Lochkreis 20' des jeweiligen Loches 20 heran. In dieser Stellung befindet sich das wirksame Ende 43 des Auswerferelementes 41 jeweils in dem Raum 44 zwischen zwei Steuernocken 41.

Die Funktionsweise der vorbeschriebenen Einzelkornsämaschine ist folgende:

Das in dem Saatgutbehälter 6 befindliche Saatgut gelangt durch die Öffnung 15 in den Saatgutvorratsraum 16. Hier liegt das Saatgut an der Vereinzelungsscheibe 19 an. Die Vereinzelungsscheibe 19 wird von der Antriebswelle 12 in bekannter Weise angetrieben, so daß sich die Scheibe 19 während des Ausbringens des Saatgutes dreht. Während des Ausbringens und des Vereinzelns des Saatgutes werden die Löcher 20 im Bereich der als Saugniere ausgebildeten Saugkammer 17 mit Saugluft beaufschlagt. Während sich die Löcher 20 in die Steuernocken 26 aufgrund der Drehung der Scheibe 19 in Drehrichtung 27 durch den Saatgutvorrat bewegen, setzen sich ein oder zwei Saatkörner 45 an den mit Saugluft beaufschlagten Löchern 20 an. Die Vorsprünge gewährleisten in vielen Fällen, daß sich nicht mehrere Saatkörner 40 in Drehrichtung 27 gesehen hintereinander an einem Loch 20 ansetzen. Bei einigen Saatgütern wird sogar aufgrund der Steuernocken 26 und des kleinen Durchmessers der Löcher 20 erreicht, daß sich immer nur ein Saatkorn 45 an einem Loch 20 ansetzt. Die Steuernocken 26 rühren gleichzeitig den Saatgutvorrat durch, so daß eine Brückenbildung des Saatgutes im Bereich der Scheibe 19 verhindet wird. Dadurch daß die Steuernocken auf der der Drehrichtung zugewandten Seite der Löcher angebracht sind, wird zwangsläufig verhindert, daß die Steuernocken 26 die Saatkörner direkt zu den Löchern 20 schaufeln; d.h. die Steuernocken 24 können die Saatkörner nicht mitnehmen. Hierdurch wird in vielfachen Fällen eine Doppelbelegung der Saatkörner 45 an einem Loch 20 vermieden. Durch die schräge Fläche 30 der Steuernok-

ken 26 werden diese Saatkörner 45 leicht angehoben bzw. weggedrückt, so daß sich ein Saatkorn 45 leicht an dem Loch 20 festsetzen kann.

Bei einigen Saatgutarten muß trotz der Steuernocken ein Abstreifelement 34 vorhanden sein, damit jedes Saatkorn vereinzelt abgelegt werden kann. In vielen Fällen ist nur ein Saatkorn 45 an jedem Loch 20 angelagert. In den Fällen, bei denen mehr als ein Saatkorn 45 an einem Loch 20 angelagert ist, müssen die zuviel angelagerten Saatkörner abgestreift werden. Dieses geschieht durch das stufenförmige Abstreifelement 34. Der Steuernocken 24 dreht in Drehrichtung 27 direkt an dem Abstreifelement 34 entlang, wobei dann das obere Saatkorn von dem mit Saugluft beaufschlagten Loch 20 weggeschoben wird. Dieses Saatkorn fällt dann wieder in den Saatgutvorratsraum 16 zurück.

Durch die fortlaufende Drehung der Scheibe 19 in Drehrichtung 27 wird das als Federstahlband ausgebildete Auswerferelement 41 jeweils durch den Steuernocken 26 betätigt; d.h. das Auswerferelement 41 wird in der Weise gespannt, wie es die Fig.5 zeigt. Nachdem die Scheibe 19 sich weiter in Drehrichtung 27 gedreht hat, wird an dem Punkt 21, der an dem Loch 20, an welchem das Saatkorn 45 anhaftet, anliegende Unterdruck unterbrochen. In diesem Moment hat der Steuernocken 26 das wirksame Ende 43 des Auswerferelementes 41 passiert, so daß das wirksame Ende 43 des Auswerferelementes 41 in die Ausgangsposition bzw. die entspannte Stellung des Auswerferelementes 41 schnellt, wie Fig.6 zeigt, wobei dann das wirksame Ende 43 des Auswerferelementes 41 bis an den Lochkreis 20' der Löcher 20 heranreicht und sich dann in den Raum 44 zwischen den beiden Steuernocken 26 befindet. Durch das Schnellen des wirksamen Endes 43 des Auswerferelementes 41 in die entspannte Stellung des Auswerferelementes 41 nach dem Passieren des Steuernockens 26 wird das an dem Loch 20 anliegende Saatkorn 45 in Pfeilrichtung 46 in Richtung auf den Boden der Säfurche beschleunigt, wenn das wirksame Ende 43 des Auswerferelementes 41 auf das Saatkorn 45 auftrifft. Hierdurch wird jedes Saatkorn 45 immer in die gleiche Richtung von jedem Loch 20, welche sich in dem Moment des Abschleuderns des Saatkornes 45 durch das wirksame Ende 43 des Auswerferelementes 41 immer in der gleichen Position befinden, und mit einer hohen Geschwindigkeit weggeschleudert. Hierdurch wird erreicht, daß alle Saatkörner in die gleiche Richtung von der Scheibe mit einer hohen Geschwindigkeit in die Säfurche geschleudert werden, so daß die die Saatkörner in gleichmäßigen Abständen auf den Boden der Säfurche auftreffen.

Die so von dem wirksamen Ende 43 des Auswerferelementes 41 beschleunigten Saatkörner 47 treffen mit einer hohen Geschwindigkeit auf den Boden er Säfurche auf. Diese hohe Geschwindigkeit verhindert weiterhin noch ein Verrollen der Saatkörner auf dem Boden der Säfurche, da die Saatkörner in den Boden geschossen werden. Somit bleiben die Saatkörner genau an der Stelle der Säfurche liegen, an der sie auftreffen. Es wird so eine äußerst präzise Ablage der Saatkörner erreicht.

Die als Vereinzelungsorgan 11 ausgebildete Scheibe 48 gemäß den Fig.7 und 8 unterscheidet sich von der Scheibe 19 gemäß den Fig.3 bis 6 durch die Anordnung der Steuernocken 49 auf der Scheibe 48. Diese Steuernocken 49 sind in dem Bereich zwischen der Antriebswelle 12 der Scheibe 48 und den Löchern 20 angeordnet. Die Anzahl der Steuernocken 49 entspricht der Anzahl der Löcher 20. Ebenfalls ist bei diesem Ausführungsbeispiel in dem Bereich des Punktes 21, an dem der an den Löchern 20 anliegende Unterdruck unterbrochen wird, das Auswerferelement 41 an dem rückwärtigen Teil 13 des Gehäuses 4 an dem Vorsprung 42 angeordnet. Auch dieses Auswerferelement 41 wird von den Steuernocken 49 in der vorbeschriebenen Weise betätigt, so daß das wirksame Ende 43 des Auswerferelementes 41 das Saatkorn 45 in Pfeilrichtung 46 von dem Loch 20 in Richtung des Säfurchenbodens wegschleudert.

Die als Vereinzelungsorgan 11 ausgebildete Scheibe 19 gemäß der Fig.9 und 10 mit den Steuernocken 26 entspricht dem Ausführungsbeispiel gemäß den Fig.3 bis 6. In dem Bereich des Punktes 21, an dem der an den Löchern 20 anliegende Unterdruck unterbrochen wird, ist das Auswerferelement 50 an dem rückwärtigen Teil 13 des Gehäuses 4 an dem Vorsprung 42 mit Hilfe des Gelenkes 51 angeordnet. Das Auswerferelement 50 ist als Stab 52 ausgebildet, der durch die Druckfeder 53 in Richtung der Löcher 20 gedrückt wird. Die Steuernocken 26 betätigen den Stab 52 gegen die Federkraft der Druckfeder 53, so daß die Druckfeder 53 gespannt wird. Nachdem ein Steuernocken 26 jeweils das wirksame Ende 54 des Auswerferelementes 50 passiert hat, drückt die Druckfeder 53 das Auswerferelement 50 aus der in Fig.9 dargestellten Position in die in Fig.10 dargestellte Position. Hierbei schnellt das Auswerferelement 50 schlagartig in diese entspannte Stellung, so daß das Saatkorn in Pfeilrichtung 46 in Richtung der Säfurche geschleudert wird.

Es ist auch durchaus denkbar, daß der Stab 52 über das Gelenk 51 hinausragt und daß an diesem über das Gelenk 52 hinausragende Stück 55 eine Zugfeder 56 an Stelle der Druckfeder 53 angeordnet ist, wie dies in Fig.10 mit strichpunktierten Linien dargestellt ist.

Patentansprüche

1. Pneumatische Einzelkornsämaschine mit einem Saatgutbehälter und einer Saugkammer, die voneinander durch ein umlaufendes scheibenförmiges Vereinzelungsorgan getrennt sind, welches auf der der Saugkammer abgewandten Seite im unteren Bereich durch den im Saatgutbehälter vorhandenen Saatgutvorrat geführt wird und konzentrisch zu der Vereinzelungsorganachse im gleichen Umfangsabstand voneinander angeordnete Löcher aufweist, wobei die Saugkammer sich längs eines Teils der Bahn der Löcher erstreckt und an einem Punkt der Bahn der Unterdruck unterbrochen ist, wobei in dem Bereich, in dem der Unterdruck unterbrochen ist, ein zumindest annähernd bis an die Mittellinie der Löcher heranreichendes bewegbares Auswerferelement angeordnet ist, d a d u r c h   g e k e n n - z e i c h n e t , daß auf dem Vereinzelungsorgan (11,19,48) auf der dem Saatgutbehälter (6) zugewandten Seite eine der Anzahl der Löcher (20) entsprechende Anzahl von Steuernocken (26,49) angeordnet sind, und daß das Auswerferelement (41, 50, 52) mit Hilfe der Steuernocken (26, 49) zu betätigen ist.

2. Einzelkornsämaschine nach Anspruch 1, d a d u r c h   g e -
k e n n z e i c h n e t  , daß das wirksame Ende (43,54) des Auswerferelementes (41, 50, 52) sich in dem Bereich (21) an dem Vereinzelungsorgan (11,19,48) befindet, in dem der an den Löchern (20)
anliegende Unterdruck unterbrochen ist.

3. Einzelkornsämaschine nach Anspruch 1, d a d u r c h   g e -
k e n n z e i c h n e t , daß das wirksame Ende (43,54) des Auswerferelementes (41,50,52) in der zumindest teilweise entspannten Stellung
des Auswerferelementes (41,50,52) zumindest bis an die Mittellinie
(20') der Löcher (20) heranragt.

4. Einzelkornsämaschine nach Anspruch 1, d a d u r c h   g e -
k e n n z e i c h n e t , daß das wirksame Ende (43,54) des Auswerferelementes (41,50,52) sich unmittelbar neben der Oberfläche (24)
des Vereinzelungsorgans (11,19,48) befindet.

5. Einzelkornsämaschine nach Anspruch 1, d a d u r c h   g e -
k e n n z e i c h n e t , daß das wirksame Ende (43, 54) des Auswerferelementes (41,50,52) während der Drehung des Vereinzelungsorgans (11,19,48) an den Steuernocken (26,49) zur Anlage kommt.

6. Einzelkornsämaschine nach Anspruch 1 oder 5, d a d u r c h
g e k e n n z e i c h n e t , daß das wirksame Ende (43,54) des
Auswerferelementes (41,50,52) jeweils nach dem Passieren eines
Steuernockens (26, 49) bis an die Mittellinie (20') des jeweiligen
Loches (20) heranreicht.

7. Einzelkornsämaschine nach Anspruch 6, d a d u r c h   g e -
k e n n z e i c h n e t , daß das wirksame Ende (43,54) des Auswerferelementes (41,50,52) jeweils nach dem Passieren eines Steuernockens
(26,49) in den Raum (44) zwischen zwei Steuernocken (26,49) ragt.

8. Einzelkornsämaschine nach Anspruch 1, d a d u r c h   g e - k e n n z e i c h n e t , daß das Auswerferelement (41) ein Federstahlband ist.

9. Einzelkornsämaschine nach Anspruch 1, d a d u r c h   g e - k e n n z e i c h n e t , daß das Auswerferelement (50) ein mit einer Feder (53,56) beaufschlagter Stab (52) ist.

10. Einzelkornsämaschine nach Anspruch 1, d a d u r c h   g e - k e n n z e i c h n e t , daß die Steuernocken (26) jeweils auf der in Drehrichtung (27) des Vereinzelungsorgans (19) gesehen zugewandten Seite des jeweiligen Loches (20) angeordnet sind und zumindest annähernd bis zu dem Lochkreis (20') der Löcher (20) reichen.

11. Einzelkornsämaschine nach Anspruch 1, d a d u r c h   g e - k e n n z e i c h n e t , daß die Steuernocken (49) in dem Bereich zwischen der Antriebswelle (12) des Vereinzelungsorgans (48) und den Löchern (20) angeordnet sind.

FIG. 1

FIG.2

FIG.3

FIG.4

FIG. 5

FIG. 6

FIG.7

FIG.8

FIG.9

FIG.10